# EUROPÄISCHE PATENTSCHRIFT

(11) **EP 2 577 084 B1**
(45) Veröffentlichungstag und Bekanntmachung des Hinweises auf die Patenterteilung: **11.05.2016**
(21) Anmeldenummer: 11709005.0
(22) Anmeldetag: 07.03.2011
(51) Int. Cl.: F16D 48/02, F16J 15/16, F16J 15/56

(54) **EINRICHTUNG MIT EINER FORMDICHTUNG**
DEVICE HAVING A MOLDED SEAL
DISPOSITIF COMPORTANT UN JOINT D'ÉTANCHÉITÉ PROFILÉ

(30) Priorität: 27.05.2010 DE 102010021806
(43) Veröffentlichungstag der Anmeldung: 10.04.2013
(73) Patentinhaber: WABCO GmbH, 30453 Hannover (DE)
(72) Erfinder: BORCHERS, Harald, 31542 Bad Nenndorf (DE); HÖLSCHER, Reiner, 30926 Seelze (DE)
(74) Vertreter: Lauerwald, Jörg
(86) Internationale Anmeldenummer: PCT/EP2011/001112
(87) Internationale Veröffentlichungsnummer: WO 2011/147494

(56) Entgegenhaltungen:
- EP-A1- 1 267 107
- EP-A2- 1 918 602
- WO-A1-2006/066547
- DE-A1- 3 331 673
- DE-A1-102007 061 951
- US-A1- 2005 074 349

## Beschreibung

Die Erfindung betrifft einen Kupplungsbestätigung-Stellzylinder zur Betätigung einer Fahrzeugkupplung gemäß dem Oberbegriff des Anspruchs 1.

Solche Einrichtungen sind beispielsweise als Druckluft-Stellzylinder bekannt, z. B. zur Betätigung einer Fahrzeugkupplung in einem Lastkraftwagen oder Omnibus. Ein solcher Druckluft-Stellzylinder ist beispielsweise aus der EP 1 344 949 B1 bekannt. Dort wird vorgeschlagen, ein Rückschlagventil in der Stirnwand des Gehäuses des Stellzylinders anzuordnen. Hierdurch wird der Stellzylinder dahingehend verbessert, dass es bei leichten Leckagen im Belüftungsventil nicht zu einem unerwünschten Druckaufbau und dadurch zu einem Ausfahren der Stellzylinder-Kolbenstange kommt.

Der vorliegenden Erfindung liegt die Aufgabe zugrunde, eine Einrichtung der im Oberbegriff des Anspruchs 1 angegebenen Art dahingehend zu verbessern, dass das in der EP 1 344 949 B1 genannte Problem, geringfügige Leckagen zu kompensieren, kostengünstiger gelöst wird.

Diese Aufgabe wird durch die im Anspruch 1 angegebene Erfindung gelöst. Die Unteransprüche geben vorteilhafte Ausgestaltungen der Erfindung an.

Gemäß der Erfindung wird das Problem, einen in Folge leichter Leckage entstehenden unerwünschten Druck zu kompensieren, überraschend einfach und insbesondere ohne die Verwendung zusätzlicher Bauelemente gelöst. Erfindungsgemäß wird eine Formdichtung, die in der Einrichtung zur Abdichtung zwischen zwei Druckräumen ohnehin erforderlich ist, zusammen mit einem Teil der Einrichtung verwendet, um ein Überströmventil zu bilden. Dies hat den Vorteil, dass keine zusätzlichen Bauteile erforderlich sind und daher die Erfindung sehr kostengünstig realisiert werden kann. Vorteilhaft wird hierbei die Formdichtung einbezogen. Unter einer Formdichtung versteht man eine Dichtung mit einem bestimmten, in der Regel unsymmetrischen Querschnittsprofil. In Folge der Profilierung hat die Formdichtung - anders als z.B. ein O-Ring - eine definierte Lage innerhalb der Einrichtung.

Ein Überströmventil ist ein Ventil, das oberhalb eines gewissen Druckwerts oder einer Differenz von Drücken schließt und unterhalb dieses Drucks bzw. dieser Druckdifferenz öffnet. In einer vorteilhaften Weiterbildung der Erfindung ist das Überströmventil derart ausgelegt, dass es Leckagen bis zu 1,5 bar kompensiert, d. h. das Überströmventil sperrt den ersten Raum von dem zweiten Raum erst bei Überschreitung eines Druckwerts von 1,5 bar ab.

Gemäß einer vorteilhaften Weiterbildung der Erfindung ist der Durchgangskanal durch eine Wand der Nut verschließbar.

Gemäß einer vorteilhaften Weiterbildung der Erfindung ist die Nutbreite größer als die Breite der Formdichtung. Hierbei ist die Formdichtung innerhalb der Nut, d.h. über die Erstreckung der Nutbreite, in Folge einer Druckdifferenz zwischen dem ersten und dem zweiten Druck verschiebbar. Über die Verschiebbarkeit der Formdichtung kann die gewünschte Ventilfunktion des Überströmventils realisiert werden. In Kombination mit der Weiterbildung, dass der Durchgangskanal durch eine Wand der Nut verschließbar ist, lässt sich das Überströmventil in einfacher Weise realisieren.

Gemäß einer vorteilhaften Weiterbildung der Erfindung ist wenigstens ein Rückstellelement zwischen der mittels der Nutwand abdichtbaren Seite des Durchgangskanals der Formdichtung und der Nutwand angeordnet. Durch ein solches Rückstellelement wird eine gewisse Kraft erzeugt, über die das Überströmventil in Öffnungsrichtung beaufschlagbar ist. Das Rückstellelement kann beispielsweise in Form einer Feder realisiert sein.

Gemäß einer vorteilhaften Weiterbildung der Erfindung weist die Formdichtung auf der mittels der Nutwand abdichtbaren Seite des Durchgangskanals wenigstens ein von der Oberfläche der Formdichtung vorstehendes Rückstellelement auf. Hierdurch kann das Rückstellelement vorteilhaft in die Formdichtung integriert ausgebildet sein. Dies hat Vorteile bei der Montage der erfindungsgemäßen Einrichtung, da das Rückstellelement nicht als separates Bauteil eingebaut werden muss, sondern zugleich mit dem Einsetzen der Formdichtung eingebaut ist. Vorteilhaft kann das Rückstellelement auch aus dem Material der Formdichtung gefertigt sein. Bei Verwendung eines elastischen Materials erzeugt das Rückstellelement eine Federkraft, deren Höhe durch entsprechende Formgebung des Rückstellelements und die Materialelastizität wählbar ist.

Gemäß einer vorteilhaften Weiterbildung der Erfindung weist das Überströmventil auf der Abströmseite eine Luftführung auf, über die abströmende Luft in einem Winkel auf die Oberfläche des ersten und/oder zweiten Bauteils gerichtet ist. Hierdurch strömt die abströmende Luft nicht parallel oder senkrecht zu der Oberfläche, sondern trifft in einem Winkel auf die Oberfläche auf, d. h. in einem Winkel ungleich dem Wert 0 Grad oder 90 Grad. Eine solche Luftführung hat den Vorteil, dass durch den Luftstrom unerwünschter Staub von der Oberfläche des ersten und/oder des zweiten Bauteils fortgeblasen werden kann und dieser Bereich daher staubfrei oder zumindest staubarm gehalten werden kann. Dies hat insbesondere Vorteile beim Einsatz der erfindungsgemäßen Einrichtung zur Betätigung einer Fahrzeugkupplung, da in solchen Einbausituationen vermehrt Staub durch den Kupplungsabrieb anfällt. Die Luftführung kann in die Formdichtung, das erste Bauteil oder in die Formdichtung und das erste Bauteil integriert sein.

Gemäß einer vorteilhaften Weiterbildung der Erfindung ist die Formdichtung als Formdichtring, insbesondere als Lippendichtring ausgebildet. Dies erlaubt den Einsatz gängiger Bauelemente, die im Handel verfügbar sind. In einer vorteilhaften Ausgestaltung der Erfindung sind eine Mehrzahl von Rückstellelementen über den Umfang des Formdichtrings verteilt angeordnet.

Dies erlaubt die kostengünstigere Realisierung eines druckluftbetätigbaren Stellzylinders in Form eines konzentrischen Stellzylinders. Insbesondere kann hiermit eine Einrichtung mit einem Ringzylinder und einem konzentrisch auf dem Ringzylinder angeordneten Ringkolben realisiert werden, wobei zwischen dem Ringzylinder und dem Ringkolben eine im wesentlichen ringförmige Druckmittelkammer gebildet ist, und wobei der Ringkolben bei Beaufschlagung der Druckmittelkammer mit Druck gegenüber dem Ringzylinder beweglich ist.

Die Erfindung wird nachfolgend anhand von Ausführungsbeispielen unter Verwendung von Zeichnungen näher erläutert.

Es zeigen
Figur 1 eine erfindungsgemäße Einrichtung in Schnittdarstellung und
Figur 2 das in der Einrichtung gemäß Figur 1 realisierte Überströmventil in vergrößerter Schnittdarstellung und
Figur 3 und 4 Ausführungsformen einer Formdichtung in Draufsicht.

In den Figuren werden gleiche Bezugszeichen für einander entsprechende Elemente verwendet.

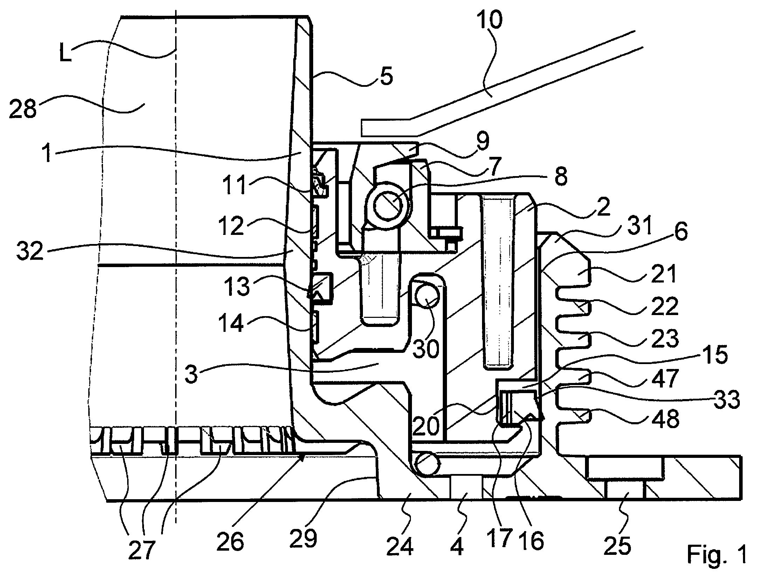

Die Figur 1 zeigt die erfindungsgemäße Einrichtung in Schnittdarstellung, wobei nur eine Hälfte der Einrichtung dargestellt ist, da die Einrichtung symmetrisch ausgeführt ist und die andere, nicht dargestellte Hälfte gleich aufgebaut ist.

Erkennbar ist ein Ringzylinder 1 mit einer im Wesentlichen zylindrischen, in der Mitte in Richtung einer Längsachse L des Ringzylinders 1 durchgehenden Öffnung 28. Durch die Öffnung 28 kann bei Verwendung des Ringzylinders als Betätigungseinrichtung für eine Fahrzeugkupplung die Getriebewelle geführt sein. Der Ringzylinder 1 weist im Bereich der Öffnung 28 einen ersten Durchmesser auf. In einem Übergangsbereich 26 vergrößert sich der Durchmesser des Ringzylinders auf einen zweiten, größeren Durchmesser bis hin zu einer Wand 29. Die ringförmige Wand 29 kann z. B. als Aufnahme für einen Zentrierflansch eines Getriebes dienen. Hierdurch kann die in Figur 1 dargestellte Einrichtung schnell zentriert auf einem Getriebe montiert werden. Der Ringzylinder 1 erstreckt sich weiter über eine Rückwand 24. In einem außen liegenden Flansch-Bereich der Rückwand 24 ist eine Befestigungsöffnung 25 vorgesehen, über die der Ringzylinder an eine Halteplatte eines Getriebes geschraubt werden kann. Der Ringzylinder 1 erstreckt sich zudem in einem als äußere Wand ausgebildeten Bereich 31 wiederum von der Rückwand 24 fort. Hierdurch bildet der Ringzylinder zwischen der die Öffnung 28 begrenzenden Wand 32 und der äußeren Wand 31 einen ringförmigen Hohlraum.

Ferner ist erkennbar, dass in dem Bereich des Übergangs von dem ersten auf den zweiten Innendurchmesser des Ringzylinders 1 lamellenartige Verstärkungsrippen 27 vorgesehen sind, die sich entlang der Längsachse L und zudem in radialer Richtung von der die Öffnung 28 begrenzenden Wand 32 nach außen hin erstrecken. Die Verstärkungsrippen 27 sind relativ schmalbauend ausgeführt, wobei der Abstand zwischen zwei Verstärkungsrippen z. B. etwa drei Mal so groß ausgeführt sein kann wie die Breite einer Verstärkungsrippe. Die Verstärkungsrippen 27 weisen, wie ebenfalls in der Figur 1 erkennbar, eine Form auf, durch die eine Kraftübertragung von dem Ringzylinderbereich mit dem kleineren Durchmesser in den Bereich mit dem größeren Durchmesser gleichmäßig im Material verteilt wird.

Auf dem Ringzylinder 1 ist ein Ringkolben 2 angeordnet. Der Ringkolben 2 bildet mit den seitlichen Wänden 31, 32 des Ringzylinders 1 sowie der Rückwand 24 eine Druckmittelkammer 3, die über eine Druckmittelversorgungsöffnung 4 mit Druckmittel, z. B. Druckluft, beaufschlagt werden kann. Auf dem Ringzylinder 2 ist eine Betätigungsplatte 9 angeordnet, über die bei Druckbeaufschlagung der Druckmittelkammer 3 ein Kupplungsausrückelement 10 mit Kraft beaufschlagt wird. Die Betätigungsplatte 9 ist über ein Kugellager 8 und einen Kugelaufnahmering 7 mit dem Ringzylinder 2 verbunden. Der Kugelaufnahmering 7 ist dabei fest mit dem Ringzylinder 2 verbunden, z. B. eingepresst oder verschraubt.

Innerhalb der Druckmittelkammer 3 ist eine Druckfeder 30 angeordnet. Über die Druckfeder 30 ist der Ringkolben 2 unter leichter Vorspannung über die Betätigungsplatte 9 gegen das Kupplungsausrückelement 10 gedrückt. Durch die Druckfeder 30 wird der Ringzylinder 2 im drucklosen Zustand in einer definierten Position gehalten.

Der Ringzylinder 1 weist eine innere Lauffläche 5 und eine äußere Lauffläche 6 für den Ringkolben 2 auf. Sämtliche zwischen dem Ringkolben 2 und dem Ringzylinder 1 wirksamen Dicht- und Abstreifelemente 11, 12, 13, 14, 16 sind direkt an dem Ringkolben 2 befestigt, d.h. ohne zusätzliche Bauteile wie etwa ein Zwischenstück oder ein zusätzliches Halteelement. Auf der Innenseite des Ringkolbens 2 sind Ringdichtungen 11, 12, 13, 14 vorgesehen, die mit der inneren Lauffläche 5 in Kontakt stehen. Am Außenumfang des Ringkolbens 2 ist in einer umlaufenden Außennut 20 des Ringkolbens 2 ein Lippendichtring 16 angeordnet. Der Lippendichtring 16 liegt mit seiner Dichtlippe an der äußeren Lauffläche 6 des Ringzylinders 1 an. Oberhalb des Lippendichtrings 16 ist eine Ringkammer 33 gebildet. Der Lippendichtrings 16 weist einen Durchgangskanal 17 auf, über den die Druckmittelkammer 3 mit der Ringkammer 33 verbindbar ist.

Der Ringzylinder 1 und der Ringkolben 2 sind aus Aluminiumguss gefertigt. An dem Ringzylinder 1 ist sowohl die innere Lauffläche 5 als auch die äußere Lauffläche 6 mit einer Eloxierung versehen.

In dem Bereich 31 weist der Ringzylinder 1 radiale, um die Längsachse L des Ringzylinders umlaufende Verstärkungsrippen 21, 22, 23, 47, 48 auf.

Wie erkennbar ist, kann die vorliegende Erfindung nicht nur bei dem anhand der Figur 1 beschriebenen konzentrischen Stellzylinder vorteilhaft eingesetzt werden, sondern bei jeglichen druckbeaufschlagbaren Einrichtungen, bei denen eine Formdichtung zwischen zwei mit Druck beaufschlagbaren Räumen vorgesehen ist.

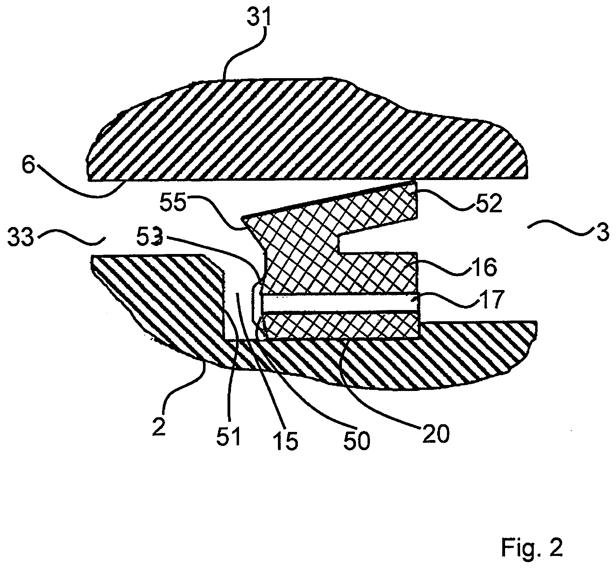

Die Figur 2 zeigt einen Ausschnitt der Einrichtung gemäß Figur 1 in der Umgebung des Lippendichtrings 16. Erkennbar ist das Gehäuseteil 31 des Ringzylinders 1, der Ringkolben 2 sowie der in der Nut 20 angeordnete Lippendichtring 16. Wie erkennbar ist, ist die Nut 20 breiter als die Breite des Lippendichtrings 16. Hierdurch ist der Lippendichtring 16 in Längsrichtung verschiebbar. Erkennbar ist der Lippendichtring 16 mit einer Dichtlippe 52, die an der Innenwand 6 des Gehäusebereichs 31 anliegt und die Druckmittelkammer 3 gegenüber der mit der Atmosphäre verbundenen Ringkammer 33 abdichtet.

Der Lippendichtring 16 weist einen Durchgangskanal 17 auf, über den in der Figur 2 dargestellten Position des Lippendichtrings 16 die Druckmittelkammer 3 mit der Ringkammer 33 verbunden ist. Auf der der Ringkammer 33 zugewandten Seite weist der Lippendichtring 16 ein Rückstellelement 50 auf, das beispielsweise im Wesentlichen ringförmig um die Ausströmöffnung des Durchgangskanals 17 herum angeordnet sein kann. Der Durchgangskanal 17 sowie das Rückstellelement 50 wirken dabei mit einer Wand 51 der Nut 20 zur Bildung des Überströmventils zusammen. Das Rückstellelement 50 weist eine Seitenwand 53 auf, die schräg verlaufen kann.

Bei einer Erhöhung des Drucks in der Druckmittelkammer 3 befindet sich der Lippendichtring 16 zunächst in der in der Figur 2 dargestellten Position. Hierbei kann Luft aus der Druckmittelkammer 3 durch den Durchgangskanal 17 in die Ringkammer 33 und damit in die Atmosphäre entweichen. Bei einer Erhöhung des Drucks in der Druckmittelkammer 3 über einen vorgegebenen Schließdruck bildet sich in Folge des relativ kleinen Durchlassquerschnitts des Durchgangskanals 17 ein entsprechender Staudruck, über den der Lippendichtring 16 nach links zu der Wand 51 der Nut 20 hin bewegt wird. Hierdurch wird der Durchgangskanal 17 durch die Wand 51 verschlossen und das Überströmventil damit geschlossen. In diesem Zustand kann keine weitere Druckluft aus der Druckmittelkammer 3 entweichen.

Bei Verringerung des Drucks in der Druckmittelkammer 3 unterhalb eines Öffnungsdrucks bewirkt das Rückstellelement 50, das beispielsweise aus elastischem Material des Lippendichtrings 16 gebildet sein kann, ein Zurückstellen des Lippendichtrings 16 zumindest so weit, dass wiederum Luft aus der Druckmittelkammer 3 über den Durchgangskanal 17 in die Ringkammer 33 und damit in die Atmosphäre entweichen kann. Der durch das Rückstellelement 50 hierbei erzeugte Spalt 15 zwischen dem Lippendichtring 16 und der Wand 51 ist in der Figur 2 zu Veranschaulichungszwecken übertrieben groß dargestellt. In der Praxis wird der Spalt relativ gewählt, jedoch ausreichend, dass unerwünschte Druckluft aus der Druckmittelkammer 3 entweichen kann.

Die über den Durchgangskanal 17 in die Ringkammer 33 ausströmende Luft wird dabei über eine Luftführung 55, die als schräge Schulter des Lippendichtrings 16 ausgebildet sein kann, in einem bestimmten Winkel umgeleitet, so dass die Luft in einem Winkel auf die äußere Lauffläche 6 des Ringszylinders 1 trifft. Die ausströmende Luft bewirkt hierbei den zusätzlichen vorteilhaften Effekt, dass auf der Lauffläche 6 angesammelter Staub fortgeblasen wird.

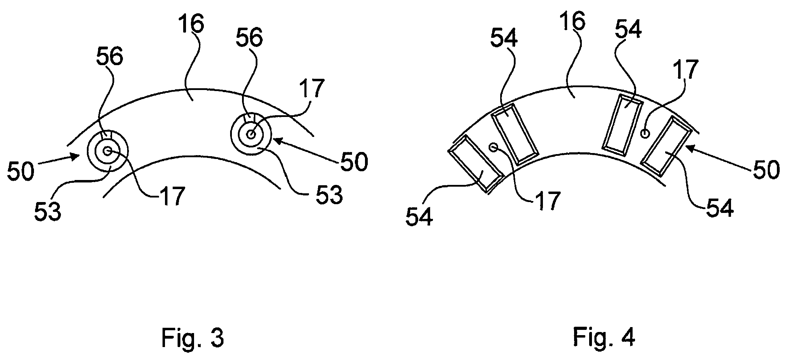

Die Figur 3 zeigt eine mögliche Realisierung einer Durchgangsöffnung 17 sowie des Rückstellelements 50 auf dem Lippendichtring 16 in einer Draufsicht auf ein Segment des Lippendichtrings 16. Wie erkennbar ist, können auch mehrere Durchgangskanäle 17 mit entsprechenden Rückstellelementen 50 vorgesehen sein. Die ringförmigen Rückstellelemente 50 weisen jeweils Abströmöffnungen 56 in Form eines Durchgangskanals auf. Über die Abströmöffnungen 56 kann die aus der Durchgangsöffnung 17 ausströmende Luft aus dem durch das ringförmige Rückstellelement 50 gebildeten Ringraum entweichen.

Die Figur 4 zeigt Rückstellelemente in Form von rechteckförmigen Erhebungen 54 auf dem Lippendichtring 16. Jeweils ein Paar von Erhebungen 54 ist auf gegenüberliegenden Seiten eines Durchgangskanals 17 angeordnet. Die Erhebungen 54 sind relativ flach ausgebildet, so dass weiterhin eine ausreichende Abdichtung der Durchgangskanäle 17 bei entsprechend hohem Druck in der Druckmittelkammer 3 erfolgen kann. Hierbei wird durch den Druck in der Druckmittelkammer 3 eine gewisse Verformung in Form einer Durchbiegung des Lippendichtrings 16 hervorgerufen, durch die die Austrittsöffnungen der Durchgangskanäle 17 gegen die Wand 51 gepresst und damit verschlossen werden.

## Patentansprüche

1. Kupplungsbetätigungs-Stellzylinder zur Betätigung einer Fahrzeugkupplung mit wenigstens einem als druckluftbetätigter Ringkolben ausgebildeten ersten Bauteil (2) und einem gegenüber dem ersten Bauteil (2) beweglich angeordneten zweiten Bauteil (1), welches als Ringzylinder ausgebildet ist, wobei der Ringkolben (2) konzentrisch in dem Ringzylinder (1) angeordnet ist, wobei in einer Nut (20) des ersten Bauteils (2) eine Formdichtung (16) angeordnet ist, die mit dem zweiten Bauteil (1) in Kontakt ist, wobei ein auf der einen Seite der Formdichtung (16) zwischen dem ersten und dem zweiten Bauteil gebildeter erster Raum (3) mit einem ersten Druck beaufschlagbar ist, wobei der erste Raum ein Druckluft-Betätigungsraum (3) zur Druckluftbetätigung des Ringkolbens (2) ist, und ein auf der gegenüberliegenden Seite der Formdichtung (16) zwischen dem ersten und dem zweiten Bauteil gebildeter zweiter Raum (33) mit einem zweiten Druck beaufschlagbar ist, wobei der Druckluft-Betätigungsraum (3) zwischen dem Kolben (2) und dem Ringzylinder (1) gebildet und durch die Formdichtung (16) abgedichtet ist, wobei die Formdichtung (16) zusammen mit dem ersten Bauteil (2) wenigstens ein Überströmventil bildet, wobei wenigstens ein Rückstellelement (50, 53, 54) vorgesehen ist, über das das Überströmventil in Öffnungsrichtung beaufschlagbar ist, **dadurch gekennzeichnet, dass** die Formdichtung (16) wenigstens einen verschließbaren Durchgangskanal (17) aufweist, über den der erste Raum (3) mit dem zweiten Raum (33) verbindbar ist.

2. Einrichtung nach Anspruch 1, **dadurch gekennzeichnet, dass** der Durchgangskanal (17) durch eine Wand (51) der Nut (20) verschließbar ist.

3. Einrichtung nach einem der vorhergehenden Ansprüche, **dadurch gekennzeichnet, dass** die Nutbreite größer ist als die Breite der Formdichtung (16), wobei die Formdichtung (16) innerhalb der Nut (20) in Folge einer Druckdifferenz zwischen dem ersten und dem zweiten Druck verschiebbar ist.

4. Einrichtung nach einem der Ansprüche 1 bis 3, **dadurch gekennzeichnet, dass** wenigstens ein Rückstellelement (50, 53, 54) zwischen der mittels der Nutwand (51) abdichtbaren Seite des Durchgangskanals (17) der Formdichtung (16) und der Nutwand (51) angeordnet ist.

5. Einrichtung nach Anspruch 4, **dadurch gekennzeichnet, dass** die Formdichtung (16) auf der mittels der Nutwand (51) abdichtbaren Seite des Durchgangskanals (17) wenigstens ein von der Oberfläche der Formdichtung vorstehendes Rückstellelement (50, 53, 54) aufweist.

6. Einrichtung nach einem der vorhergehenden Ansprüche, **dadurch gekennzeichnet, dass** das Überströmventil auf der Abströmseite eine Luftführung (55) aufweist, über die abströmende Luft in einem Winkel auf die Oberfläche (6) des ersten und/oder des zweiten Bauteils (1, 2) gerichtet ist.

## Claims

1. Clutch actuation control cylinder for actuating a vehicle clutch, having at least one first component (2) which is in the form of a compressed-air-actuable annular piston and one second component (1) which is arranged so as to be movable relative to the first component (2), which is in the form of an annular cylinder, wherein the first chamber is a compressed-air actuation chamber (3) for compressed-air actuation of the annular piston (2), a moulded seal (16) is arranged in a groove (20) of the first component (2), which moulded seal is in contact with the second component (1), wherein a first chamber (3) formed on one side of the moulded seal (16) between the first and the second component can be charged with a first pressure wherein the compressed-air actuation chamber (3) is formed between the piston (2) and the annular cylinder (1) and is sealed off by the moulded seal (16); and a second chamber (33) formed on the opposite side of the moulded seal (16) between the first and the second component can be charged with a second pressure, the annular piston (2) is arranged concentrically in the annular cylinder (1), wherein the moulded seal (16) forms, together with the first component (2), at least one overflow valve, **characterized in that** the moulded seal (16) has at least one closable passage duct (17) via which the first chamber (3) can be connected to the second chamber (33).

2. Device according to Claim 1, **characterized in that** the passage duct (17) can be closed off by a wall (51) of the groove (20).

3. Device according to one of the preceding claims, **characterized in that** the groove width is greater than the width of the moulded seal (16), wherein the moulded seal (16) can be displaced within the groove (20) as a result of a pressure difference between the first and the second pressure.

4. Device according to one of Claims 1 to 3, **characterized in that** at least one restoring element (50, 53, 54) is arranged between the groove wall (51) and that side of the passage duct (17) of the moulded seal (16) which can be sealed off by means of the groove wall (51).

5. Device according to Claim 4, **characterized in that** the moulded seal (16) has, on that side of the passage duct (17) which can be sealed off by means of the groove wall (51), at least one restoring element (50, 53, 54) which projects from the surface of the moulded seal.

6. Device according to one of the preceding claims, **characterized in that** the overflow valve has, on the outflow side, an air guide (55) by means of which outflowing air is directed at an angle towards the surface (6) of the first and/or second component (1, 2).

## Revendications

1. Cylindre de réglage d'actionnement d'un embrayage pour l'actionnement d'un embrayage de véhicule comprenant au moins un premier composant (2) réalisé sous forme de piston annulaire commandé par l'air comprimé, et un deuxième composant (1) disposé de manière mobile par rapport au premier composant (2), qui est réalisé sous forme de cylindre annulaire, le piston annulaire (2) étant disposé concentriquement dans le cylindre annulaire (1), un joint profilé (16) étant disposé dans une rainure (20) du premier composant (2), lequel est en contact avec le deuxième composant (1), un premier espace (3) réalisé sur l'un des côtés du joint profilé (16) entre le premier et le deuxième composant pouvant être sollicité par une première pression, le premier espace étant un espace d'actionnement par air comprimé (3) pour l'actionnement par air comprimé du piston annulaire (2), et un deuxième espace (33) formé sur le côté opposé du joint profilé (16) entre le premier et le deuxième composant pouvant être sollicité par une deuxième pression, l'espace d'actionnement par air comprimé (3) étant formé entre le piston (2) et le cylindre annulaire (1) et étant étanchéifié par le joint profilé (16), le joint profilé (16) avec le premier composant (2) formant au moins une soupape de décharge, au moins un élément de rappel (50, 53, 54) étant prévu, par le biais duquel la soupape de décharge peut être sollicitée dans le sens de l'ouverture, **caractérisé en ce que** le joint profilé (16) présente au moins un canal traversant (17) pouvant être fermé, par le biais duquel le premier espace (3) peut être connecté au deuxième espace (33).

2. Dispositif selon la revendication 1, **caractérisé en ce que** le canal traversant (17) peut être fermé par une paroi (51) de la rainure (20).

3. Dispositif selon l'une quelconque des revendications précédentes, **caractérisé en ce que** la largeur de la rainure est plus grande que la largeur du joint profilé (16), le joint profilé (16) pouvant être déplacé à l'intérieur de la rainure (20) du fait d'une différence de pression entre la première et la deuxième pression.

4. Dispositif selon l'une quelconque des revendications 1 à 3, **caractérisé en ce qu'**au moins un élément de rappel (50, 53, 54) est disposé entre le côté du canal traversant (17) du joint profilé (16) pouvant être étanchéifié au moyen de la paroi de rainure (51), et la paroi de rainure (51).

5. Dispositif selon la revendication 4, **caractérisé en ce que** le joint profilé (16) présente, du côté du canal traversant (17) pouvant être étanchéifié au moyen de la paroi de rainure (51), au moins un élément de rappel (50, 53, 54) faisant saillie depuis la surface du joint profilé.

6. Dispositif selon l'une quelconque des revendications précédentes, **caractérisé en ce que** la soupape de décharge présente, du côté de l'écoulement, un guide d'air (55) par le biais duquel l'air sortant est orienté suivant un certain angle vers la surface (6) du premier et/ou du deuxième composant (1, 2).
